# EUROPEAN PATENT SPECIFICATION

(11) **EP 1 307 036 B1**
(45) Date of publication and mention of the grant of the patent: **01.03.2006**
(21) Application number: 01125822.5
(22) Date of filing: 29.10.2001
(51) Int. Cl.: H04M 3/22, H04Q 7/34, H04L 29/06

(54) **Call monitoring in a communication system**
Anrufüberwachung in einem Kommunikationssystem
Surveillance d'appels dans un système de communication

(43) Date of publication of application: 02.05.2003
(73) Proprietor: TELEFONAKTIEBOLAGET LM ERICSSON (publ), 164 83 Stockholm (SE)
(72) Inventor: Hellwig, Karl, 97539 Wonfurt (DE); Hodges, Phil, VIC 3143 Armadale (AU)
(74) Representative: Kribber, Klaus-Dieter

(56) References cited:
- EP-A- 1 111 892
- WO-A-00/56029
- WO-A-00/70885
- GB-A- 2 350 261
- 3RD GENERATION PARTNERSHIP PROJECT: "3G SECURITY; LAWFUL INTERCEPTION ARCHITECTURE AND FUNCTIONS (3GPP TS 33.107 VERSION 4.1.0 RELEASE 4" 3GPP TECHNICAL SPECIFICATION 33.107 V4.1.0, [Online] September 2001 (2001-09), XP002197509 Retrieved from the Internet: <URL:HTTP://www.3gpp.org> [retrieved on 2002-04-18]

## Description

### FIELD OF THE INVENTION

The present invention relates generally to intercepting communications in a telephone network, and more, specifically to intercepting communications of tandem free or transcoder free established telephone calls.

### DESCRIPTION OF THE PRIOR ART

From WO 01/47222 the use of a Legal Intercept Monitoring Centre (LIC) for intercepting communication in a Public Land Mobile Network (PLMN) is known. In WO 00/70885 a codec negotiation is disclosed wherein each node sends for communication setup a list of supported options, and any transit node deletes from the list the options it does not support. The terminating node selects a preferred option and returns this information to the initiating node. A legal interception node is also informed of the selected option in order to be able to decode the intercepted communication. EP 1 111 892 discloses methods and systems for IP network surveillance.

The known system allows under all circumstances to monitor the acoustic content of a speech channel as the law enforcement authorities get PCM encoded speech. In Tandem Free Operation compressed voice frames are overlaid on a PCM stream by stealing the two least significant bits of each frame. If the Tandem Free Operation is kept during the monitoring operation the law enforcement authorities are provided with the six most significant bits of the PCM stream. As this PCM stream is not a true copy of the originally encoded voice data the subscribers could transmit data in the compressed mode that is not included in the remaining PCM frame of six bits and therefore will be missed by the law enforcement authorities. If Tandem Free Operation is cancelled for each monitored call in order to provide the law enforcement authorities with the originally encoded voice then the two subscribers could detect the drop of Tandem Free Operation due to the different speech quality. They can take this as an indication that their call is monitored. If Transcoder Free Operation is supported a similar scenario could occur of the law enforcement authorities always get transcoded voice ascertain data could be transmitted by the terminals that is filtered off by the PCM encoding algorithms.

### SUMMARY OF THE INVENTION

It is therefore an object of the invention to present a solution for lawful interception that can not be detected and that provides full transparency.

This object is achieved by the methods and apparatuses as set out in the independent claims. Further details are defined in the depentent claims.

This object is in particular achieved by a network node in a telephone system with at least one monitoring apparatus for monitoring payload data exchanged between at least two subscribers wherein the network node sends information on the codec type that has been selected by said at least two subscribers for their call to the monitoring apparatus and that a copy of the payload data is send unmodified to the monitoring apparatus.

Thus a tandem free operation or a transcoder free operation must not be any longer suppressed in order to ensure a lawful interception as the monitoring apparatus itself is now able to decode the intercepted data. As full transparancy is provided the payload data exchanged by the subscribers can be searched for hidden data. However as a precondition for this solution the monitoring device always must be equipped with the most up-to-date codec types otherwise the content of the monitored call can not be decoded.

In another embodiment of the invention in case a call is to be monitored a network node compares a list of codec type that are supported by at least one of the subscribers with a list of codecs that are supported from a monitoring apparatus generating an updated list of codecs in which all codecs are removed that are not supported by the monitoring apparatus and the network node uses for call setup the updated codec list instead of the list associated to the first subscriber. As only the updated codec type list is used for call setup it is thereby ensured that only calls will be established between a first subscriber and a second subscriber that can be decoded by the equipment of the law enforcement authorities.

This solution has the advantage that the law enforcement equipment must not be equipped with all up-to-date codec types. A subset of all codec types will be sufficient. As usually the codec type with the best speech quality that is available to both subscribers is chosen a significant drop of speech quality may be prevented. In order not to jeopardize the purpose of the invention the monitoring equipment should support at least one codec type the speech quality of which is hard to distinguish from up-to-date codecs.

In the third generation partnership project the network node that receives and updates the list of codecs is the so called mobile switching center. However, the person skilled in the art will readily appreciate that the invention is not restricted to 3GPP systems. The invention is applicable to any network entity the function of which is to support monitoring of calls between subscribers whatever it is called and wherever it is located in a communication system. Therefore the list of codecs supported by a monitoring equipment may be requested by the network node for each monitored call. However the network node itself may locally administrate such a list of one or more monitoring equipment. The general idea of this embodiment is that between a first and a second subscriber only calls of a certain speech codec type are established for which a corresponding codec type is available in the monitoring equipment.

Usually in 3GPP the subscriber initiating a call sends the list of its available codecs. However as the invention relates to modifying a list of codec types according to the codec types that are available in a monitoring equipment the teaching of the invention also covers cases in which a list of all available codec types of the called subscriber is used to decide which codec type should be used. This list may be kept up-to-date by regulary polling the different monitoring equipments and collecting information about which codec types are supported by each individual monitoring equipment. For this purpose the monitoring equipment on request must send a list of the codecs that are supported by the monitoring equipment. Another possibility is that the list of codecs is updated by service personal which edits the list when new codecs have been added or codecs have been removed from a monitoring equipment.

### BRIEF DESCRIPTION OF THE INVENTION

In the following the invention will be further described according to the figures and by means of examples

The figures show
- Fig.1: Call establishment in case monitoring apparatus is provided with full codec support
- Fig. 2: Signal flow in case monitoring apparatus modifies supported codec type list
- Fig. 3: Modification of Codec Noified to DF2 in New Call Related Event
- Fig. 4: User Plane Establishment deploying 3GPP IuFP protocol
- Fig. 5: TFO bits presented to LEMF within PCM frames

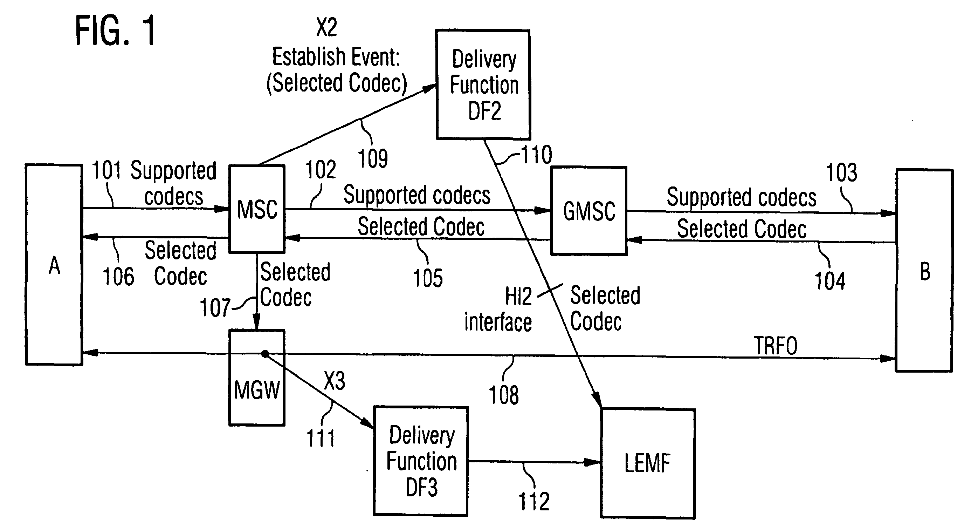

A first embodiment is shown in Figure 1 for the case a subscriber A wants to call a subscriber B. The mobile terminal of subscriber A sends a list of the codec types it supports via a message Supported_Codecs to the network node that handles the call (signaling step 101). In case of a Third Generation Partnership Project (3GPP) system the function of controlling the establishment, maintaining and releasing a call is located in so called mobile switching centers MSC. The mobile switching center MSC to which the first subscriber is assigned to forwards the message Supported_Codecs to the GMSC (signaling step 102) to which the called subscriber is assigned to. The GMSC forwards the message Supported_Codecs to the second subscriber B (signaling step 103). The subscriber B compares the received list of codec types of subscriber A with the list of codec types that is supported of the second subcriber B. Normally that codec type that is common to both subscribers that provides the best quality is selected. The selected codec type is transmitted back via the GMSC (signaling step 104), from there to the MSC (signaling step 105) and from there to the subscriber A (signaling step 106).

As both subscribers support a common codec type a transcoder free operation can be established that provides highest possible quality as no transcoding is necessary within the switched call path. Therefore the media gateway MGW that handles the payload data exchange of the established call is informed by the MSC about the selected codec type in signaling step 107. The Media Gateway MGW switches to a transparent mode and just forwards the payload data, e.g. the speech data from one subscriber of the call to the other subscriber of the call and vice versa (data exchange 108).

In the instant the Selected_codec message arrives at the MSC, the MSC - in case the call should be monitored - informs the legal enforcement monitoring function LEMF about the codec type that has been agreed on by the two subscribers. For the current Third Generation Partnership Project (3GPP) the existing lawful interception architecture is described in 3G TS 33.107. The law enforcement monitoring functions (LEMF) are national specific and not defined by 3GPP. Delivery functions adopt the standardized interfaces X1_1, X2, X3 of the 3G call control servers to the national interfaces HI1, HI2, HI3 of the law enforcement monitoring functions LEMF. Call related events are sent to the LEMF by Delivery Function 2. These are non-real time events and thus could not be used for resolving bearer issues. Currently there is no defined signaling protocol between the 3G call control servers and the Delivery Functions which control the legal interception equipment. The solutions proposed by the invention add new protocol signaling but do not require a change in the existing hardware.

In this embodiment the Call Related Events (as defined in TS 33.107) are used to indicate the selected codec types and possibly the available codec types. These events are categorized. The first event, called Call Establishment is sent from the MSC to the Delivery Function F2 (signaling step 109) which informs via the interface HI2 the law enforcement monitoring function LEMF (signaling step 110).

During the ongoing call the Media Gateway MGW copies the data received from each subscriber A, B and sends them via the X3 interface (in data exchange step 111) and the Delivery Function DF3 to the law enforcement monitoring function LEMF (via data exchange step 112). As the LEMF is provided with all up-to-date codec types it is able to decode the received data as it also has been informed about the selected codec type.

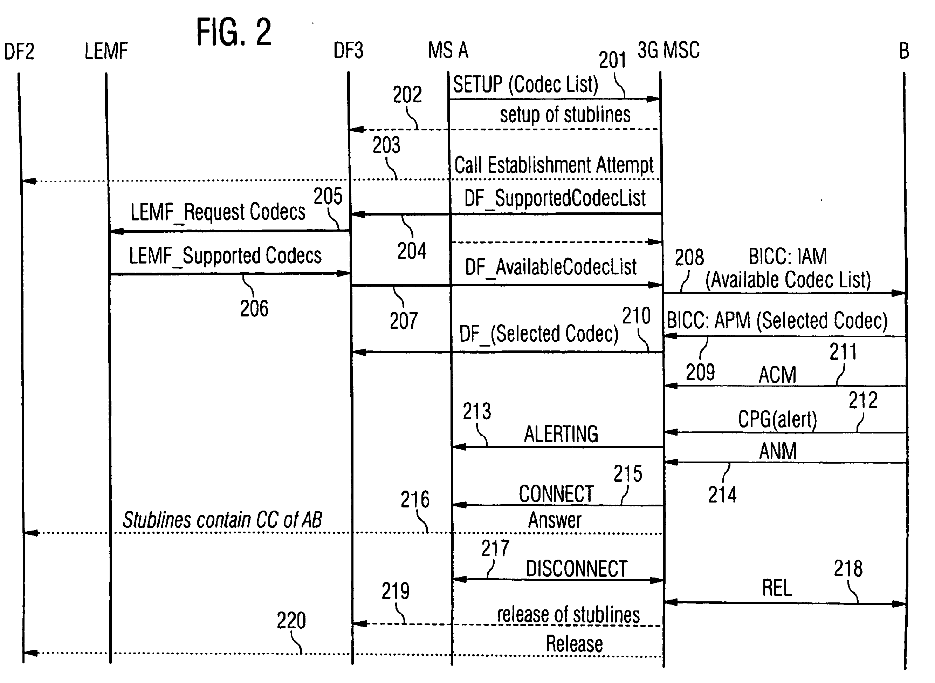

In another preferred embodiment a specific signaling interface is introduced towards the delivering function. One way to accomplish that is shown in Fig. 2 where the signaling between the delivery function DF2, the law enforcement monitoring function LEMF, the delivery function DF3, a calling subscriber MS A (the mobile subscriber that is intended to be monitored), a mobile switching center MSC, a called subscriber B (that can be another mobile subscriber or a subscriber in the public telephone net) is shown. To establish a call the mobile terminal of the calling subscriber A sends during set-up to the associated mobile switching center MSC of the cell from where the calling subscriber is calling a list of its built in codecs (signaling step 201). In the mobile switching center MSC all calls that are set up are checked if the calling subscriber or the called subscriber are to be intercepted. If this is the case the stublines are set up towards the delivery function DF3 (signaling step 202). Further a Call Establishment Attempt is made towards delivery function DF2 (signaling step 203). The next step, that is new with respect to prior art technology the mobile switching center sends the codec list, that it has received from the calling subscriber MS A to the delivery function DF3 (signaling step 204) in a message called DF_SupportedCodecList. By means of a message called LEMF_RequestCodecs the delivery function DF3 requests from the law enforcement monitoring function LEMF a list of the coders that are available in the law enforcement monitoring function LEMF (signaling step 205). In response to that request the law enforcement monitoring function LEMF sends back to the delivery function DF3 in a message called LEMF_SupportedCodecs the list of its available codec types (signaling step 206). It should be noted that the last two signaling steps 205, 206 need not to be executed in real time. The delivery function DF3 now compares the list received from the calling subscriber MS A and the list received from the law enforcement monitoring function LEMF and removes from the list of the calling subscriber MS A all codec types that are not common. By this the updated codec type list contains only codecs types which can be decoded by the law enforcement monitoring function LEMF. In a message called DF_AvailabelCodecList this updated codec type list is sent to the mobile switching center MSC (signaling step 207). The updated codec type list is sent from the mobile switching center to the second subscriber B in a BICC: IAM message (signaling step 208). The codec type selected by the second subscriber B is sent back to the mobile switching center MSC in a BICC: APM message (signaling step 209). In order to enable the lawful enforcement monitoring function LEMF to use the selected codec type the selected codec type is sent to the Delivery Function DF3 in a message called DF_SelectedCodec (signaling step 210). Then ACM and CPG(alert) are sent from subscriber B to the mobile switching center MSC (signaling steps 211, 212). ALERTING is sent from mobile switching center MSC to the first subscriber A (signaling step 213). In reaction to the ANM sent from the second subscriber B to the mobile switching center MSC (signaling step 214) the mobile switching center MSC sends a CONNECT message to the first subscriber A (signaling steps 215). The stublines from the mobile switching center MSC to the Delivery Function DF2 contain a copy of the data exchanged by the first and second subscriber A, B (data exchange 216). As the codec type used between the subscribers A, B is known to the law enforcement monitoring function LEMF the LEMF can decode the speech data. As full transparancy is ensured the LEMF is also able to check if any other data is hidden in the data exchanged by the two subscribers A,B.

In case the call is disconnected a DISCONNECT message is exchanged (signaling step 217) and the connection is released by a release message REL (signaling step 218). In response to a release message (signaling step 219) sent to the delivery function DF2 the stub lines are released (220) too.

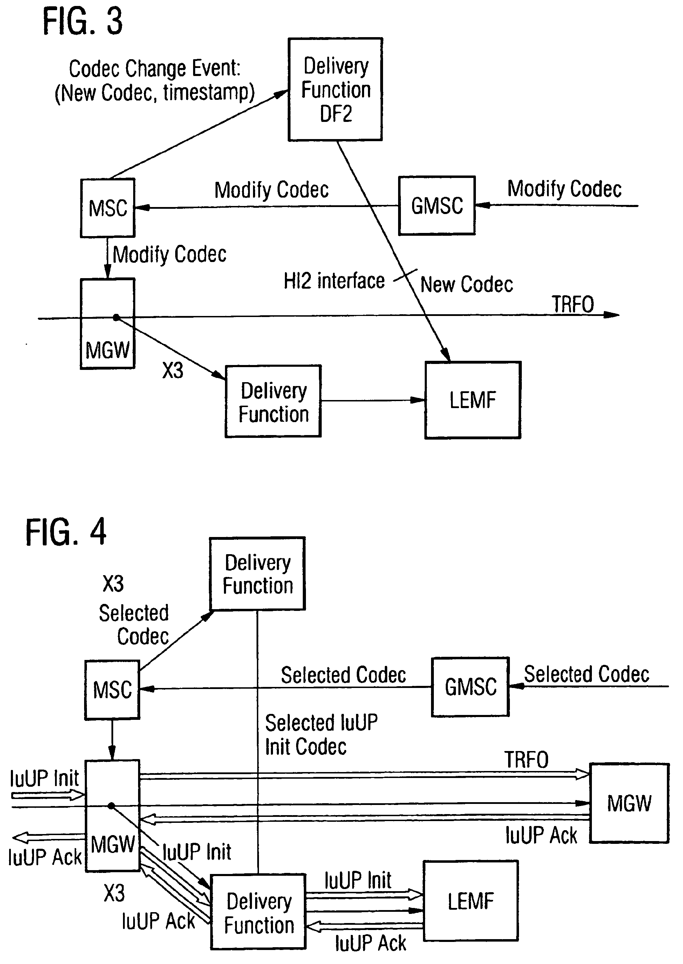

In this alternative codec modification would also need to be indicated to the DF2. Codec modification could be time stamped and included in its own Call Related Event. This could be also achieved via additional parameter to existing call related events (e.g. Handover or Supplementary Service) or a new call related event could be defined. Figure 3 shows the modification.

The delivery function and or the LEMF has the receive inband information such as framing protocol control procedures that would normally be sent end-to-end between the call nodes. For Legal Interception these control procedures (e.g. rate control changes) are also needed. One solution to this would be to generate copies of the control procedures and forward them to the LEMF; this would be the effect of sending all data packets to the LEMF. An alternative solution would be to implement a user plane independent protocol to inform the LEMF of the control information that it would need. This would enable the LEMF to understand the payload without having to support all framing protocols that could be deployed in a network. For example existing framing protocols that carry such information but in different formats are: IuFP (3GPP TS 25.415), AAL2 type 2 service specific convergence sublayer for narrow-band services (ITU-T I.366.2) and RTP Payload format for AMR and AMR-WB audio(IETF draft-ietf-avt-rtp-amr-10.txt).

An example using the IuFP protocol is shown in Figure 4. Each node in the Transcoder Free Operation TrFO connection that will interpret the payload must receive the UP Initialisation Frame and store the RAB Subflow Combination Ids.

If the Out Of Band Signaling through the network is not supported or TrFO was unsucessful and the call is established with PCM/G711 encoding the possibility of TFO still exists. The new codec signaling described in the previous chapter would indicate codec type ITU G711 for example as the default PCM codec.

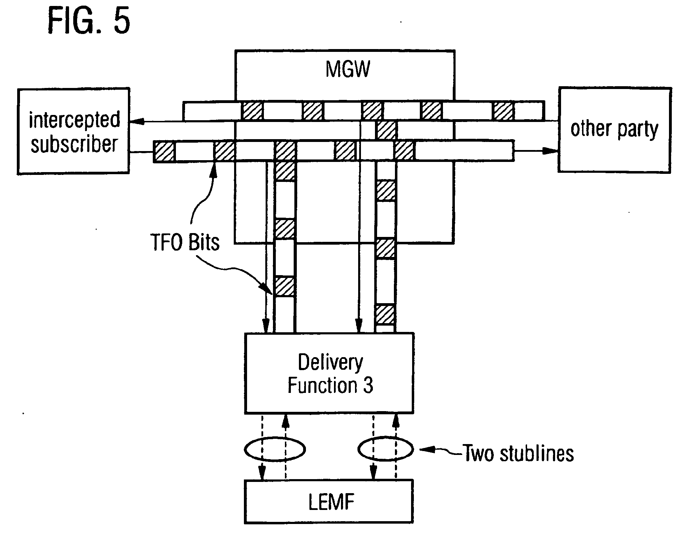

One alternative is that the MGW shall always provide the LEMF with all data sent and received between the two points of interception. This may then include copies of the TFO protocol to initiate Tandem Free Operation. This means the equipment in the LEMF will know when TFO is active or not. The bearer delivery is shown in Figure 5.

Another alternative is that this is performed by the DF3 and new explicit signalling is made to the LEMF to indicate if TFO is active or not. A further alternative is that the MSC can indicate when TFO is possible in the network during call establishment if it supports theTFO package and is requesting Transcoders to support the TFO function. This H.248 package also supports the ability to turn TFO off.

Furthermore it has be mentioned again that the invention is not restricted to the specific embodiments and examples described in the present invention. That is, on the basis of the teaching contained in the description, various modifications and variations of the invention may be carried out, within the scope of the appended claims.

## Claims

1. A method in a telephone system for supporting a monitoring of payload data exchanged between at least two subscribers (A, B),
**characterized in** the step of
limiting codec types available for being selected for an exchange of the payload data between the at least two subscribers (A, B) to codec types available in a monitoring apparatus.

2. The method according to claim 1, wherein information on a codec type that has been selected for an exchange of the payload data between the at least two subscribers (A, B) is sent to the monitoring apparatus, and
wherein a copy of the payload data is sent to the monitoring apparatus.

3. The method according to claim 1 or 2, wherein a first subscriber (MS A) is involved in the exchange of payload data, and wherein during setup of the exchange of payload data that is to be monitored a list of speech codec types that are supported by said first subscriber (MS A) is compared with a list of codec types that are supported by the monitoring apparatus (LEMF),
wherein an updated list of codec types is generated, in which all codec types are removed that are not supported by the monitoring apparatus (LEMF), and
wherein the updated codec list is used for setup the exchange of payload data instead of the list associated to the first subscriber (MS A).

4. The method according to claim 3, wherein said list of codecs supported by the monitoring apparatus (LEMF) is requested from the monitoring apparatus each time a payload data exchange is going to be monitored.

5. The method according to claim 3, wherein the network node (MSC) keeps a list of which codec types are supported by a specific monitoring apparatus (LEMF).

6. The method according to any of the preceding claims, wherein the monitoring apparatus (LEMF) is always provided with all data sent and received between two points of interception.

7. The method according to any of the preceding claims, wherein a modification of the selected codec is indicated to the monitoring apparatus (LEMF).

8. A network node in a telephone system for supporting a monitoring of payload data exchanged between at least two subscribers (A, B),
**characterized in that**
the network node is adapted to limit codec types available for being selected for the exchange of the payload data between the at least two subscribers (A, B) to codec types available in a monitoring apparatus.

9. The network node according to claim 8,
adapted to send information on a codec type that has been selected for an exchange of the payload data between the at least two subscribers (A, B) to the monitoring apparatus, and
adapted to send a copy of the payload data to the monitoring apparatus.

10. The network node according to claim 8 or 9,
adapted to compare during a setup of the exchange of payload data, which is to be monitored, a list of speech codec types, which are supported by a first subscriber (MS A) involved in the exchange of payload data, with a list of codec types that are supported by the monitoring apparatus (LEMF),
adapted to generate an updated list of codec types, in which all codec types are removed that are not supported by the monitoring apparatus (LEMF), and
adapted to use the updated codec list for the setup of the exchange of payload data instead of the list associated to the first subscriber (MS A).

11. The network node (MSC) according to claim 10, adapted to request said list of codecs supported by the monitoring apparatus (LEMF) from the monitoring apparatus each time a payload data exchange is going to be monitored.

12. The network node (MSC) according to claim 10, wherein the network node (MSC) is adapted to keep a list of which codec types are supported by a specific monitoring apparatus (LEMF).

13. The network node (MSC) according to any of claims 8 to 12, adapted to indicate a modification of the selected codec to the monitoring apparatus (LEMF).

14. A method for monitoring payload data exchanged in a telephone system between at least two subscribers (A, B),
**characterized in that**
information on codec types available in a monitoring apparatus is provided by the monitoring apparatus to a network node of the telephone system for limiting codec types available for being selected for the exchange of the payload data.

15. The method according to claim 14, wherein information on a codec type that has been selected for an exchange of the payload data between the at least two subscribers (A, B) is received at the monitoring apparatus, and
wherein a copy of the payload data is received at the monitoring apparatus.

16. The method according to claim 14 or 15, wherein the monitoring apparatus (LEMF) sends responsive on a request a list of codec types that are supported by the monitoring apparatus (LEMF).

17. A monitoring apparatus for monitoring payload data exchanged in a telephone system between at least two subscribers (A, B),
**characterized in that**
the monitoring apparatus is adapted to provide information on codec types available in the monitoring apparatus to a network node of the telephone system for limiting codec types available for being selected for the exchange of the payload data.

18. The monitoring apparatus according to claim 17,
adapted to receive information on a codec type that has been selected for an exchange of the payload data between the at least two subscribers (A, B), and
adapted to receive a copy of the payload data.

19. The monitoring apparatus according to claim 17 or 18, adapted to send responsive on a request a list of codec types that are supported by the monitoring apparatus (LEMF).

20. A telephone system comprising at least one of the network nodes of claims 8 to 13.

21. A telephone system according to claim 20 comprising at least one of the monitoring apparatuses of claims 17 to 19.

## Patentansprüche

1. Verfahren in einem Telefonsystem zum Unterstützen einer Überwachung von Nutzlastdaten, die zwischen mindestens zwei Teilnehmern (A, B) ausgetauscht werden,
**gekennzeichnet durch** den Schritt
des Beschränkens von Codec-Typen, die zur Auswahl für einen Austausch der Nutzlastdaten zwischen den mindestens zwei Teilnehmern (A, B) zur Verfügung stehen, auf Codec-Typen, die in einer Überwachungsvorrichtung zur Verfügung stehen.

2. Verfahren nach Anspruch 1, wobei Informationen zu einem Codec-Typ, der für einen Austausch der Nutzlastdaten zwischen den mindestens zwei Teilnehmern (A, B) ausgewählt wurde, an die Überwachungsvorrichtung gesendet wird und wobei eine Kopie der Nutzlastdaten an die Überwachungsvorrichtung gesendet wird.

3. Verfahren nach Anspruch 1 oder 2, wobei ein erster Teilnehmer (MS A) an dem Austausch von Nutzlastdaten beteiligt ist und wobei während des Aufbaus des Austauschs von Nutzlastdaten, der zu überwachen ist, eine Liste von Sprachcodec-Typen, die von dem ersten Teilnehmer (MS A) unterstützt werden, mit einer Liste von Codec-Typen verglichen wird, die von der Überwachungsvorrichtung (LEMF) unterstützt werden, wobei eine aktualisierte Liste von Codec-Typen erzeugt wird, in der alle Codec-Typen gelöscht werden, die von der Überwachungsvorrichtung (LEMF) nicht unterstützt werden, und wobei die aktualisierte Codec-Liste anstelle der Liste, die mit dem ersten Teilnehmer (MS A) in Zusammenhang steht, zum Aufbau des Austauschs von Nutzlastdaten verwendet wird.

4. Verfahren nach Anspruch 3, wobei die Liste von Codecs, die von der Überwachungsvorrichtung (LEMF) unterstützt werden, von der Überwachungsvorrichtung jedes Mal angefordert wird, wenn ein Nutzlastdatenaustausch überwacht werden soll.

5. Verfahren nach Anspruch 3, wobei der Netzknoten (MSC) eine Liste darüber führt, welche Codec-Typen von einer spezifischen Überwachungsvorrichtung (LEMF) unterstützt werden.

6. Verfahren nach einem der vorhergehenden Ansprüche, wobei die Überwachungsvorrichtung (LEMF) stets mit allen Daten versorgt wird, die zwischen den zwei Abhörungspunkten gesendet und empfangen werden.

7. Verfahren nach einem der vorhergehenden Ansprüche, wobei der Überwachungsvorrichtung (LEMF) eine Modifikation des ausgewählten Codec angezeigt wird.

8. Netzknoten in einem Telefonsystem zum Unterstützen einer Überwachung von Nutzlastdaten, die zwischen mindestens zwei Teilnehmern (A, B) ausgetauscht werden,
**dadurch gekennzeichnet, dass**
der Netzknoten dazu eingerichtet ist, Codec-Typen, die zur Auswahl für einen Austausch der Nutzlastdaten zwischen den mindestens zwei Teilnehmern (A, B) zur Verfügung stehen, auf Codec-Typen zu beschränken, die in einer Überwachungsvorrichtung zur Verfügung stehen.

9. Netzknoten nach Anspruch 8,
dazu eingerichtet, Informationen zu einem Codec-Typ, der für einen Austausch der Nutzlastdaten zwischen den mindestens zwei Teilnehmern (A, B) ausgewählt wurde, an die Überwachungsvorrichtung zu senden, und
dazu eingerichtet, eine Kopie der Nutzlastdaten an die Überwachungsvorrichtung zu senden.

10. Netzknoten nach Anspruch 8 oder 9,
dazu eingerichtet, während eines Aufbaus des Austauschs von Nutzlastdaten, der zu überwachen ist, eine Liste von Sprachcodec-Typen, die von einem ersten Teilnehmer (MS A) unterstützt werden, der an dem Austausch von Nutzlastdaten beteiligt ist, mit einer Liste von Codec-Typen zu vergleichen, die von der Überwachungsvorrichtung (LEMF) unterstützt werden,
dazu eingerichtet, eine aktualisierte Liste von Codec-Typen zu erzeugen, in der alle Codec-Typen gelöscht sind, die von der Überwachungsvorrichtung (LEMF) nicht unterstützt werden, und dazu eingerichtet, die aktualisierte Codec-Liste anstelle der Liste, die mit dem ersten Teilnehmer (MS A) in Zusammenhang steht, zum Aufbau des Austauschs von Nutzlastdaten zu verwenden.

11. Netzknoten (MSC) nach Anspruch 10, dazu eingerichtet, die Liste von Codecs, die von der Überwachungsvorrichtung (LEMF) unterstützt werden, von der Überwachungsvorrichtung jedes Mal anzufordern, wenn ein Nutzlastdatenaustausch überwacht werden soll.

12. Netzknoten (MSC) nach Anspruch 10, wobei der Netzknoten (MSC) dazu eingerichtet ist, eine Liste darüber zu führen, welche Codec-Typen von einer spezifischen Überwachungsvorrichtung (LEMF) unterstützt werden.

13. Netzknoten (MSC) nach einem der Ansprüche 8 bis 12, dazu eingerichtet, der Überwachungsvorrichtung (LEMF) eine Modifikation des ausgewählten Codec anzuzeigen.

14. Verfahren zum Überwachen von Nutzlastdaten, die in einem Telefonsystem zwischen mindestens zwei Teilnehmern (A, B) ausgetauscht werden,
**dadurch gekennzeichnet, dass**
Informationen zu Codec-Typen, die in einer Überwachungsvorrichtung zur Verfügung stehen, von der Überwachungsvorrichtung einem Netzknoten des Telefonsystems zum Beschränken von Codec-Typen, die zur Auswahl für einen Austausch der Nutzlastdaten zur Verfügung stehen, bereitgestellt wird.

15. Verfahren nach Anspruch 14, wobei Informationen zu einem Codec-Typ, der für einen Austausch der Nutzlastdaten zwischen den mindestens zwei Teilnehmern (A, B) ausgewählt wurde, an der Überwachungsvorrichtung empfangen werden und wobei eine Kopie der Nutzlastdaten an der Überwachungsvorrichtung empfangen wird.

16. Verfahren nach Anspruch 14 oder 15, wobei die Überwachungsvorrichtung (LEMF) als Reaktion auf eine Anforderung eine Liste von Codec-Typen sendet, die von der Überwachungsvorrichtung (LEMF) unterstützt werden.

17. Überwachungsvorrichtung zum Überwachen von Nutzlastdaten, die in einem Telefonsystem zwischen mindestens zwei Teilnehmern (A, B) ausgetauscht werden,
**dadurch gekennzeichnet, dass**
die Überwachungsvorrichtung dazu eingerichtet ist, Informationen zu Codec-Typen, die in der Überwachungsvorrichtung zur Verfügung stehen, einem Netzknoten des Telefonsystems zum Beschränken von Codec-Typen, die zur Auswahl für den Austausch der Nutzlastdaten zur Verfügung stehen, bereitzustellen.

18. Überwachungsvorrichtung nach Anspruch 17,
die dazu eingerichtet ist, Informationen zu einem Codec-Typ, der für einen Austausch der Nutzlastdaten zwischen den mindestens zwei Teilnehmern (A, B) ausgewählt wurde, zu empfangen, und die dazu eingerichtet ist, eine Kopie der Nutzlastdaten zu empfangen.

19. Überwachungsvorrichtung nach Anspruch 17 oder 18, die dazu eingerichtet ist, als Reaktion auf eine Anforderung eine Liste von Codec-Typen zu senden, die von der Überwachungsvorrichtung (LEMF) unterstützt werden.

20. Telefonsystem, das mindestens einen der Netzknoten der Ansprüche 8 bis 13 umfasst.

21. Telefonsystem nach Anspruch 20, das mindestens eine der Überwachungsvorrichtungen der Ansprüche 17 bis 19 umfasst.

## Revendications

1. Procédé dans un système de téléphonie pour assumer une surveillance de données de charge utile échangées entre au moins deux abonnés (A,B),
**caractérisé par** l'étape de
limitation des types de codecs susceptibles d'être sélectionnés en vue d'un échange de données de charge utile entre au moins deux abonnés (A,B) aux types de codecs disponibles dans un appareil de surveillance.

2. Procédé selon la revendication 1, dans lequel l'information relative à un type de codec qui a été sélectionné en vue d'un échange de données de charge utile entre au moins deux abonnés (A,B) est envoyée à l'appareil de surveillance, et
dans lequel une copie des données de charge utile est envoyée à l'appareil de surveillance.

3. Procédé selon la revendication 1 ou 2, dans lequel un premier abonné (MS A) est impliqué dans l'échange de données de charge utile et dans lequel, pendant l'établissement de l'échange de données de charge utile qui doit être surveillé, une liste de types de codecs vocaux qui sont pris en charge par ledit premier abonné (MS A) est comparée à une liste de types de codecs qui sont pris en charge par l'appareil de surveillance (LEMF),
dans lequel une liste mise à jour de types de codecs est générée, dans laquelle tous les types de codecs qui ne sont pas pris en charge par l'appareil de surveillance (LEMF) sont supprimés, et dans lequel la liste de codecs mise à jour est utilisée pour établir l'échange de données de charge utile au lieu de la liste associée au premier abonné (MS A).

4. Procédé selon la revendication 3, dans lequel ladite liste de codecs pris en charge par l'appareil de surveillance (LEMF) est demandée à l'appareil de surveillance chaque fois qu'un échange de données de charge utile doit être surveillé.

5. Procédé selon la revendication 3, dans lequel le noeud de réseau (MSC) conserve une liste des types de codecs qui sont pris en charge par un appareil de surveillance spécifique (LEMF).

6. Procédé selon l'une quelconque des revendications précédentes, dans lequel toutes les données envoyées et reçues entre deux points d'interception sont toujours fournies à l'appareil de surveillance (LEMF).

7. Procédé selon l'une quelconque des revendications précédentes, dans lequel une modification du codec sélectionné est indiquée à l'appareil de surveillance (LEMF).

8. Noeud de réseau dans un système de téléphonie pour assumer une surveillance des données de charge utile échangées entre au moins deux abonnés (A,B),
**caractérisé en ce que**
le noeud de réseau est adapté afin de limiter les types de codecs susceptibles d'être sélectionnés en vue d'un échange de données de charge utile entre au moins deux abonnés (A,B) aux types de codecs disponibles dans un appareil de surveillance.

9. Noeud de réseau selon la revendication 8,
adapté afin d'envoyer une information relative à un type de codec qui a été sélectionné en vue d'un échange de données de charge utile entre au moins deux abonnés (A,B) à l'appareil de surveillance, et
adapté afin d'envoyer une copie des données de charge utile à l'appareil de surveillance.

10. Noeud de réseau selon la revendication 8 ou 9,
adapté afin de comparer, pendant un établissement de l'échange de données de charge utile qui doit être surveillé, une liste de types de codecs vocaux, qui sont pris en charge par un premier abonné (MS A) impliqué dans l'échange de données de charge utile, à une liste de types de codecs qui sont pris en charge par l'appareil de surveillance (LEMF),
adapté afin de générer une liste mise à jour de types de codecs, dans laquelle tous les types de codecs qui ne sont pas pris en charge par l'appareil de surveillance (LEMF) sont supprimés et adapté afin d'utiliser la liste de codecs mise à jour pour établir l'échange de données de charge utile au lieu de la liste associée au premier abonné (MS A).

11. Noeud de réseau (MSC) selon la revendication 10,
adapté afin de demander à l'appareil de surveillance ladite liste de codecs pris en charge par l'appareil de surveillance (LEMF) chaque fois qu'un échange de données de charge utile doit être surveillé.

12. Noeud de réseau (MSC) selon la revendication 10, dans lequel le noeud de réseau (MSC) est adapté afin de conserver une liste des types de codecs qui sont pris en charge par un appareil de surveillance (LEMF) spécifique.

13. Noeud de réseau (MSC) selon l'une quelconque des revendications 8 à 12, adapté afin d'indiquer une modification du codec sélectionné à l'appareil de surveillance (LEMF).

14. Procédé de surveillance de données de charge utile échangées dans un système de téléphonie entre au moins deux abonnés (A,B),
**caractérisé en ce que**
une information concernant les types de codecs disponibles dans un appareil de surveillance est fournie par l'appareil de surveillance à un noeud de réseau du système de téléphonie afin de limiter les types de codecs susceptibles d'être sélectionnés en vue de l'échange de données de charge utile.

15. Procédé selon la revendication 14, dans lequel une information concernant un type de codec qui a été sélectionné en vue d'un échange de données de charge utile entre au moins deux abonnés (A,B) est reçue par l'appareil de surveillance et dans lequel une copie des données de charge utile est reçue par l'appareil de surveillance.

16. Procédé selon la revendication 14 ou 15, dans lequel l'appareil de surveillance (LEMF) envoie en réponse à une demande une liste de types de codecs qui sont pris en charge par l'appareil de surveillance (LEMF).

17. Appareil de surveillance pour surveiller des données de charge utile échangées dans un système de téléphonie entre au moins deux abonnés (A,B),
**caractérisé en ce que**
l'appareil de surveillance est adapté afin de fournir une information concernant les types de codecs disponibles dans l'appareil de surveillance à un noeud de réseau du système de téléphonie afin de limiter les types de codecs susceptibles d'être sélectionnés en vue de l'échange de données de charge utile.

18. Appareil de surveillance selon la revendication 17,
adapté afin de recevoir une information concernant un type de codec qui a été sélectionné en vue d'un échange de données de charge utile entre au moins deux abonnés (A,B)et adapté afin de recevoir une copie des données de charge utile.

19. Appareil de surveillance selon la revendication 17 ou 18, adapté afin d'envoyer en réponse à une demande une liste de types de codecs qui sont pris en charge par l'appareil de surveillance (LEMF).

20. Système de téléphonie comprenant au moins un des noeuds de réseau selon les revendications 8 à 13.

21. Système de téléphonie selon la revendication 20,
comprenant au moins un des appareils de surveillance selon les revendications 17 à 19.
